# EUROPÄISCHE PATENTSCHRIFT

(11) **EP 4 000 875 B1**
(45) Veröffentlichungstag und Bekanntmachung des Hinweises auf die Patenterteilung: **01.05.2024**
(21) Anmeldenummer: 21189693.1
(22) Anmeldetag: 04.08.2021
(51) Int. Cl.: B29C 65/22, B29C 65/76, B29C 65/82, B65B 7/28, B65B 9/04, B65B 25/00, B65B 43/46, B65B 51/14, B65B 57/00, B65D 75/32, B65B 51/10, B65B 69/00

(54) **VERFAHREN ZUM HERSTELLEN EINER VERPACKUNG**
METHOD FOR MANUFACTURING A PACKAGING
PROCÉDÉ DE FABRICATION D'UN EMBALLAGE

(30) Priorität: 23.11.2020 EP 20209304
(43) Veröffentlichungstag der Anmeldung: 25.05.2022
(73) Patentinhaber: KOCH Pac-Systeme GmbH, 72285 Pfalzgrafenweiler (DE)
(72) Erfinder: Bitzer, Jürgen, 72160 Horb (DE); Maier, Jens, 77776 Bad Rippoldsau (DE); Eppler, Markus, 72285 Herzogsweiler (DE); Helber, Frank, 72221 Haiterbach (DE)
(74) Vertreter: Wächter, Jochen

(56) Entgegenhaltungen:
- DE-A1-102016 117 834
- JP-A- S62 251 327
- US-A1- 2014 331 602

## Beschreibung

Die vorliegende Erfindung betrifft ein Verfahren zum Herstellen einer Verpackung, insbesondere einer heißversiegelten Kunststoffverpackung, wie einer Kontaktlinsenverpackung.

Zum Verpacken von Produkten werden häufig Verpackungen verwendet, die eine in einem Formteil ausgebildete Produktaufnahme aufweisen, die mittels eines Deckmaterials verschlossen ist. Nach dem Befüllen der Produktaufnahme mit dem Produkt wird das Deckmaterial entlang einer Siegelnaht, die die Produktaufnahme umgibt, an das Formteil gesiegelt. Die DE 10 2016 117 834 A1 offenbart beispielsweise ein Siegelwerkzeug zum Erzeugen einer Siegelnaht, das mindestens zwei Heizleiter zum Beheizen von Teilabschnitten eines Heizelements umfasst, die unterschiedlich ansteuerbar sind. Dadurch kann über die Oberfläche des Heizelements ein Temperaturprofil erzeugt werden, um die Siegeltemperatur lokal präzise einzustellen.

Ein wesentliches Qualitätsmerkmal solcher Verpackungen ist die Ausprägung der Siegelnaht, die nicht nur unmittelbar nach der Herstellung sondern über eine gewisse Lebensdauer oder Haltbarkeit eine feste Verbindung zwischen dem Formteil und dem Deckmaterial sowie die Dichtheit der verschlossenen Produktaufnahme gewährleisten muss. Zugleich muss sich die Verpackung benutzerfreundlich öffnen lassen. Wird das Deckmaterial zugunsten einer festen Verbindung zu stark an das Formteil gesiegelt, besteht die Gefahr, dass sich die Siegelnaht vor allem zu Beginn des Öffnens nicht aufbrechen lässt oder zum initialen Öffnen und zum Abreißen der Deckfolie vom Formteil eine zu hohe Kraft erforderlich ist. Dies kann auch zu einem ruckartigen Auf- bzw. Abreißen der Deckfolie führen, sobald die notwendige Kraft aufgebracht wird, wobei der Verpackungsinhalt verloren gehen kann.

Aus dem Stand der Technik sind daher verschiedene Möglichkeiten zum Variieren der Siegelstärke bekannt. So beschreibt die DE 203 09 243 U1 beispielsweise eine Blisterverpackung, bei der ein Deckmaterial aus Karton mittels eines klebenden Siegelmediums an einen Blister gesiegelt wird. Auf das Siegelmedium sind Mittel zur Minderung der klebenden Wirkung aufgebracht, um eine definierte Zahl von schwach oder gar nicht versiegelten Zonen entlang der Siegelnaht zu bilden. Die Mittel zur Minderung der klebenden Wirkung können durch einen Lack oder eine Abdeckung ausgebildet sein. Gemäß US 2007/0059464 A1 wird ebenfalls eine Beschichtung zur Minderung der Siegelstärke auf die Siegelfläche aufgebracht. In beiden Fällen muss die Siegelfläche folglich vorab mit zusätzlichem Material behandelt werden, wodurch erhöhte Kosten und ein erhöhter Herstellaufwand entstehen.

Einen anderen Ansatz offenbart die EP 1 526 090 A2, wonach die Siegelnaht in einem zu öffnenden Bereich schmäler ausgebildet ist, wodurch zum Öffnen weniger Kraft aufgebracht werden muss. Allerdings muss in diesem Fall die Breite der Siegelnaht über die Breite des Flansches variiert werden, auf dem sie ausgebildet ist. Für eine Einstellung der erforderlichen Kraft ist folglich jedes Mal das Verpackungsdesign zu ändern.

Darüber hinaus offenbart JP S62 251 327 A ein zweistufiges Siegelverfahren, bei dem zunächst um die gesamte Produktaufnahme herum eine erste Siegelnaht unter Verwendung einer ersten Siegeltemperatur gebildet wird. Anschließend wird ein Abschnitt der bereits gebildeten Siegelnaht unter Verwendung einer zweiten Siegeltemperatur, die höher ist als die erste Siegeltemperatur, erneut versiegelt. Der zweifach versiegelte Abschnitt weist eine höhere Abziehkraft auf.

US 2014/331602 A1 offenbart schließlich eine Siegelvorrichtung mit einem Siegelstempel, an dem zwei Siegelkonturabschnitte ausgebildet sind. Ein erster Siegelkonturabschnitt bildet in einem ersten Schritt eine erste Siegelnaht um eine Produktaufnahme herum, und ein zweiter Siegelkonturabschnitt bildetet auf einer bereits gebildeten ersten Siegelnaht einen Abschnitt mit einer erhöhten Abziehkraft. Die Siegeltemperaturen der beiden Siegelkonturabschnitte können unabhängig voneinander gesteuert werden.

Es ist eine Aufgabe der vorliegenden Erfindung, ein Verfahren bereitzustellen, das eine einfache und kostengünstige Möglichkeit zum Herstellen einer Verpackung bietet, die sicher verschlossen und zugleich leicht zu öffnen ist.

Diese Aufgabe wird durch den Gegenstand des Anspruchs 1 gelöst. Bevorzugte Ausführungsformen sind Gegenstand der Unteransprüche.

Ein erfindungsgemäßes Verfahren zum Herstellen einer Verpackung, insbesondere einer heißversiegelten Kunststoffverpackung, die zumindest eine mittels einer Deckfolie verschlossene Produktaufnahme eines Formteils umfasst, umfasst die folgenden Schritte:
a) Definieren einer zu erzeugenden Siegelnaht, entlang derer die Deckfolie um die Produktaufnahme herum an das Formteil zu siegeln ist;
b) Einteilen der zu erzeugenden Siegelnaht in eine Mehrzahl von Abschnitten, die zumindest einen ersten Abschnitt und einen zweiten Abschnitt umfasst;
c) Bestimmen einer Abziehkraft der Deckfolie vom Formteil zumindest für den ersten Abschnitt der Mehrzahl von Abschnitten und vorzugsweise jeweils einer Abziehkraft für jeden Abschnitt der Mehrzahl von Abschnitten;
d) Siegeln der Deckfolie an das Formteil entlang der Siegelnaht mittels einer Siegelvorrichtung mit einer ersten Siegeltemperatur im ersten Abschnitt und einer zweiten Siegeltemperatur im zweiten Abschnitt, wobei sich die erste und die zweite Siegeltemperatur unterscheiden, und wobei zumindest die erste Siegeltemperatur für den ersten Abschnitt basierend auf der gemäß Schritt c) festgelegten Abziehkraft gewählt ist, wobei die Siegelvorrichtung eine Siegelkontur aufweist, die in eine Mehrzahl von Segmenten eingeteilt ist, wobei zumindest ein erstes Segment der Mehrzahl von Segmenten dem ersten Abschnitt der Siegelnaht und zumindest ein zweites Segment der Mehrzahl von Segmenten dem zweiten Abschnitt der Siegelnaht zugeordnet ist, und Schritt das Erwärmen der Mehrzahl von Segmenten entsprechend der Siegeltemperaturen umfasst.

Auf diese Art und Weise kann durch Siegeln mit unterschiedlichen Siegeltemperaturen in definierten Abschnitten der Siegelnaht die Abziehkraft und somit das Öffnungsverhalten der Verpackung gezielt und besonders einfach, insbesondere ohne zusätzliche Mittel und Veränderung des Verpackungsdesigns, eingestellt werden. Ohne großen Aufwand kann sichergestellt werden, dass die Siegelnaht und somit die Verpackung zum einen dicht genug ausgebildet ist und sich die Verpackung zum anderen möglichst leicht öffnen ist.

Das Siegeln erfolgt bevorzugt durch thermisches Siegeln bzw. Heißsiegeln. Die Siegelvorrichtung umfasst hierzu eine Siegelkontur, die die Deckfolie oder das Formteil kontaktiert und die erforderliche Wärme zum Erzeugen der Siegelnaht einleitet. Weiterhin umfasst die Siegelvorrichtung eine Heizeinrichtung, insbesondere eine elektrische Widerstandsheizung, zum Erwärmen der Siegelkontur.

Der Siegelvorgang gemäß Schritt d) wird maßgeblich bestimmt durch die Prozessparameter Siegeldruck, Siegeldauer und Siegeltemperatur. Für diese Prozessparameter sind in der Regel in Abhängigkeit von der Materialpaarung von Formteil und Deckfolie sowie den Anforderungen an die Siegelnaht entsprechende Soll-Werte vorbestimmt. Für ein gutes Siegelergebnis und somit eine ausreichende Qualität der Siegelnaht ist es erforderlich, dass die Prozessparameter präzise eingestellt sind und allenfalls in einem sehr kleinen Toleranzbereich von den vorgegebenen Soll-Werten abweichen.

Der Siegeldruck beträgt vorzugsweise zwischen 0,1 und 1,0 N/mm², mehr bevorzugt zwischen 0,3 und 0,6 N/mm². Die Siegeldauer beträgt vorzugsweise zwischen 0,4 und 1,5 s, mehr bevorzugt zwischen 0,8 und 1,2 s. Die Siegeltemperatur beträgt vorzugsweise zwischen 150 und 250°C, mehr bevorzugt zwischen 180 und 230°C.

Es versteht sich, dass das Formteil entsprechend auch eine Mehrzahl von Produktaufnahmen aufweisen kann oder mehrere Formteile mit jeweils einer Produktaufnahme zum Siegeln nebeneinander angeordnet sind, wobei dann vorzugsweise jeweils eine Siegelnaht eine Produktaufnahme umgibt und die Siegelvorrichtung eine der Anzahl von Produktaufnahmen bzw. Siegelnähten entsprechende Mehrzahl von Siegelkonturen aufweist. Das erfindungsgemäße Verfahren ist somit ohne weiteres auch auf solche Ausführungsformen anwendbar.

Grundsätzlich kann das Formteil bahnförmig, zum Beispiel als Formfolienbahn ausgebildet sein. Das Verfahren umfasst dann bevorzugt vor Schritt d) das Formen, insbesondere Thermoformen, zumindest einer Produktaufnahme in die Formfolienbahn und das Füllen jeder Produktaufnahme mit einem Produkt. Das Thermoformen umfasst das Bereitstellen der Formfolienbahn, das Erwärmen der Formfolienbahn mittels einer Heizvorrichtung und das Formen der Produktaufnahme mittels einer Formvorrichtung. In Schritt d) wird dann die Deckfolie, die vorzugsweise ebenfalls bahnförmig vorliegt, an die Formfolienbahn gesiegelt. Blisterpackungen für medizinische oder pharmazeutische Produkte werden z.B. oft auf diese Art und Weise hergestellt.

Alternativ kann das Formteil dem Siegeln gemäß Schritt d) auch als separat gebildetes Einzelteil mit einer oder mehreren Produktaufnahmen zugeführt werden. Zum Beispiel kann das Formteil bereits aus einer größeren Einheit, wie einer Formfolienbahn, ausgestanzt oder ausgeschnitten sein oder, wie unter anderem bei Kontaktlinsenverpackungen üblich, durch Spritzguss gebildet sein. In diesem Fall umfasst das Verfahren vor Schritt d) vorzugsweise das Bilden des Formteils durch Spritzgießen und das Füllen der Produktaufnahme des Formteils mit einem Produkt.

Das Formteil ist vorzugsweise aus Kunststoff, insbesondere aus Polypropylen gebildet. Die Deckfolie ist vorzugsweise eine Kunststoff- oder Metallfolie und kann auch mehrlagig ausgebildet sein.

Die Produktaufnahme ist vorzugsweise als (Blister-) Napf bzw. Hof im Formteil ausgebildet. Die Verpackung kann zum Beispiel eine Blisterpackung mit einem Blisternapf oder einer Mehrzahl von Blisternäpfen zur Aufnahme von medizinischen oder pharmazeutischen Produkten sein. Die Verpackung kann auch eine Kontaktlinsenverpackung mit einem Napf oder einer Mehrzahl von Näpfen zur Aufnahme jeweils einer Kontaktlinse und eines Fluids sein.

Die Produktaufnahme enthält vorzugsweise ein Produkt und/oder ein Fluid, wie beispielsweise bei Pharmazeutika oder Kosmetika. Ist die Verpackung zum Beispiel eine Kontaktlinsenverpackung, enthält die Produktaufnahme eine Kontaktlinse und eine Lösung, die die Kontaktlinse umgibt. Wenn die Produktaufnahme ein Fluid enthält, sind die Anforderungen an die Dichtheit der mittels des Siegelnaht verschlossenen Produktaufnahme besonders hoch. Zugleich besteht die Gefahr, das Fluid zu verschütten, wenn sich die Verpackung nicht leicht öffnen lässt. Das erfindungsgemäße Verfahren eignet sich besonders gut, die Stärke der Siegelnaht unter Beachtung dieser Anforderungen abschnittsweise zu optimieren.

Das Formteil kann im Allgemeinen einen Flansch aufweisen, der die Produktaufnahme umgibt. Der Flansch stellt eine Siegelfläche bereit, auf der die Deckfolie an das Formteil gesiegelt wird. Die Siegelnaht ist folglich bevorzugt auf dem Flansch ausgebildet.

Das Definieren der Siegelnaht gemäß Schritt a) umfasst insbesondere das Definieren einer Ausprägung der Siegelnaht, wie zum Beispiel eines Verlaufs der Siegelnaht um die Produktaufnahme, einer Länge der Siegelnaht, einer Breite der Siegelnaht. Vorzugsweise umgibt die Siegelnaht die Produktaufnahme vollständig. Das Definieren der Siegelnaht erfolgt in der Regel einmal für eine gewisse Art und Ausbildung von Verpackung, z.B. während des Designs und der Auslegung der Verpackung, und wird anschließend für alle entsprechend herzustellenden Verpackungen übernommen.

Die Siegelnaht um die Produktaufnahme weist vorzugsweise eine Länge auf, die zwischen 10 mm und 1200 mm, mehr bevorzugt zwischen 25 mm und 600 mm, noch mehr bevorzugt zwischen 50 mm und 150 mm beträgt. Die Siegelkontur weist bevorzugt eine entsprechende Länge auf. Die Breite der Siegelnaht ist vorzugsweise im Wesentlichen konstant.

Die Siegelkontur der Siegelvorrichtung weist vorzugsweise eine Form auf, die mit der Form der Siegelnaht korrespondiert, insbesondere bezüglich des Verlaufs der Siegelnaht um die Produktaufnahme herum. Dadurch wird die Wärmeeinbringung durch die Siegelvorrichtung zum Siegeln gemäß Schritt d) gezielt auf den Bereich der zu erzeugenden Siegelnaht gerichtet.

In einer bevorzugten Ausführungsform sind die Siegelnaht und die Siegelkontur im Wesentlichen ringförmig ausgebildet. Die Siegelnaht ist folglich um die Produktaufnahme umlaufend und in sich geschlossen ausgebildet ist. Die Siegelkontur ist dann um einen zentralen Bereich, in dem die Siegelvorrichtung keine Siegelkontur aufweist, umlaufend und in sich geschlossen ausgebildet. Die im Wesentlichen ringförmige Siegelkontur ist folglich derart ausgebildet, dass sie bei Kontakt zur Deckfolie die Produktaufnahme im Formteil vollständig umgibt. Die im Wesentlichen "ringförmige" Gestalt der Siegelkontur und der Siegelnaht ist nicht auf einen Kreisring beschränkt, sondern umfasst vielmehr beliebige Umfangsformen, wie zum Beispiel Ellipsen, Polygone und andere, vorzugsweise gekrümmte Formen, die die Produktaufnahme umgeben können. Die Länge der Siegelnaht bzw. der Siegelkontur entsprechen bei ringförmiger Ausbildung einem Umfang der Siegelnaht bzw. der Siegelkontur, vorzugsweise entlang einer Mittellinie derselben.

Das Einteilen der Siegelnaht in eine Mehrzahl von Abschnitte gemäß Schritt b) dient vorzugsweise der Unterteilung der Siegelnaht in Abschnitte, in denen unterschiedliche Anforderungen an die Siegelnaht im Vordergrund stehen. So kann im nachfolgenden Schritt c) entsprechend der jeweiligen Anforderungen eine geeignete Abziehkraft für den jeweiligen Abschnitt festgelegt werden. Die Abschnitte der Mehrzahl von Abschnitten grenzen vorzugsweise aneinander an, sodass die gesamte Siegelnaht in Abschnitte eingeteilt ist. Dass die Siegelnaht in eine Mehrzahl von Abschnitte eingeteilt ist, bedeutet nicht, dass die Abschnitte strukturell unterteilt bzw. voneinander getrennt sein müssen. Die Unterteilung der Siegelnaht in die Mehrzahl von Abschnitte erfolgt vielmehr "imaginär" gemäß den Anforderungen und der Funktion der Siegelnaht im jeweiligen Abschnitt.

Die Deckfolie ist in einer Abziehrichtung vom Formteil abzuziehen. Die Abziehrichtung ist bevorzugt in einer Ebene ausgerichtet, in der auch die Siegelnaht ausgebildet ist. Ferner ist die Abziehrichtung beginnend von einer ersten Stelle, an der sich die Deckfolie beim Öffnen der Verpackung zuerst vom Formteil löst, zu einer zweiten Stelle, an der die Deckfolie beim Öffnen der Verpackung am längsten mit dem Formteil verbunden ist, definiert. Die Abziehrichtung kann durch die Gestalt und Auslegung der Verpackung vorgegeben sein. Zum Beispiel weist die Deckfolie vorzugsweise eine Aufreißlasche auf, an der zum Öffnen der Verpackung zu ziehen ist und die dadurch die erste Stelle vorgibt. Im Weiteren ist die Abziehrichtung im Wesentlichen durch die Geometrie der Siegelnaht sowie deren Siegelstärke bestimmt.

Die Mehrzahl von Abschnitten der Siegelnaht und insbesondere der erste und der zweite Abschnitt sind vorzugsweise in Abziehrichtung hintereinander angeordnet. Dabei kann der erste Abschnitt in Abziehrichtung vor dem zweiten Abschnitt angeordnet sein. Die Deckfolie wird beim Öffnen der Verpackung dann zuerst vom ersten Abschnitt und dann vom zweiten Abschnitt gelöst. Dies hat den Vorteil, dass die unterschiedlichen Anforderungen an die Ausbildung der Siegelnaht, die während des Öffnens der Verpackung im ersten Abschnitt und des Abziehens der Deckfolie im zweiten Abschnitt vorliegen, besonders gut berücksichtigt werden können.

Die Mehrzahl von Abschnitten kann auch mehr als den ersten und den zweiten Abschnitt umfassen. Vorzugsweise wird jeder Abschnitt der Mehrzahl von Abschnitten mit einer jeweiligen Siegeltemperatur gesiegelt, die sich von der Siegeltemperatur der anderen Abschnitte unterscheiden kann oder auch der Temperatur eines Teils der anderen Abschnitte entsprechen kann.

In einer bevorzugten Ausführungsform umfasst die Mehrzahl von Abschnitten den ersten, den zweiten und einen dritten Abschnitt. Der erste Abschnitt ist ein Aufreißabschnitt, in dem die Deckfolie zum Öffnen der Verpackung als erstes vom Formteil zu lösen ist. Die Deckfolie kann in einem dem ersten Abschnitt zugeordneten ersten Bereich der Deckfolie die Aufreißlasche aufweisen. Der zweite Abschnitt ist ein Abziehabschnitt, der zwischen dem ersten und dem dritten Abschnitt angeordnet ist und in dem die Deckfolie zum Öffnen der Verpackung vom ersten Abschnitt in Abziehrichtung zum dritten Abschnitt hin abzuziehen ist. Der dritte Abschnitt ist ein Endabschnitt, der in Abziehrichtung hinter dem ersten und dem zweiten Abschnitt angeordnet ist und in dem die Deckfolie beim Öffnen der Verpackung am längsten mit dem Formteil verbunden ist. Zumindest in diesen Abschnitten unterscheiden sich die Anforderungen an die Siegelnaht der Verpackung meist deutlich, weshalb es besonders vorteilhaft ist, die erforderliche Abziehkraft in diesen Abschnitten kontrolliert einzustellen. Beliebige gröbere oder feinere Einteilungen der Siegelnaht sind möglich.

Die Abziehkraft ist hierin definiert als die Kraft, die erforderlich ist, um die Deckfolie vom Formteil zu lösen. Dem Fachmann ist eine Peelkraft bekannt, die die mittlere Kraft bezeichnet, die notwendig ist, um ein Peelsystem wieder zu trennen. Ein Peelsystem umfasst zwei Komponenten, insbesondere Folien aus Kunststoff oder Metall, die trennbar miteinander verhaftet sind. Im vorliegenden Fall bilden die Deckfolie und das Formteil, die mittels der Siegelnaht verbunden sind, ein Peelsystem.

Das Peelverhalten des Peelsystems kann beispielsweise mittels eines Fixed-Arm-Peeltests in Anlehnung an den ESIS TC4 Normvorschlag "Peel Testing of Flexible Laminates" oder ASTN F88/F88M "Standard Test Method for Seal Strength of Flexible Barrier Materials" charakterisiert werden. Für Verpackungen von medizinischen Produkten, wie Kontaktlinsenverpackungen, sind die Anforderungen z.B. in DIN 868-5:2019-03 festgelegt.

Während des Peeltests wird die Deckfolie mittels einer Zugfestigkeits-Prüfmaschine (Zugmaschine) vom Formteil abgezogen und dabei ein Peelkraft-Bruchweg-Diagramm aufgezeichnet. Regelmäßig weist der Peelkraftverlauf in einem solchen Diagramm zu Beginn einen Anfangspeak und zum Schluss einen Schlusspeak auf, zwischen denen ein charakteristisches Plateau ausgebildet ist. Für die Messgröße der Peelkraft wird üblicherweise nur dieses charakteristische Plateau zwischen 10% oder 20% und 80% oder 90% des Bruchwegs herangezogen. Ein solcher Peelkraftverlauf ergibt sich bei Verpackungen der hierin beschriebenen Art vor allem dann, wenn die Siegelparameter (Temperatur, Druck, Dauer) entlang der Siegelnaht konstant sind und somit auch die Siegelstärke entlang der Siegelnaht konstant ist.

Die hierin beschriebene Abziehkraft entspricht im Wesentlichen einer Peelkraft, es soll jedoch der gesamte Kraftverlauf betrachtet und wie gewünscht angepasst werden. Die hierin angegebenen Werte der Abziehkraft sollen in Anlehnung an die zuvor beschriebenen Normen in einem Fixed-Arm-Peeltest bestimmt werden, wobei das Formteil der Verpackung in eine entsprechende Halterung eingesetzt ist, die Deckfolie in einem Winkel (Peelwinkel) von 135° zur Verpackung abgezogen wird und eine Ziehgeschwindigkeit der Zugmaschine 254 mm/min (10 in/min) beträgt.

Mit dem erfindungsgemäßen Verfahren ist es nun möglich, einen gewünschten Verlauf der Abziehkraft mittels der Einstellung der Siegelvorrichtung einzustellen.

Zunächst kann das Einteilen der zu erzeugenden Siegelnaht in eine Mehrzahl von Abschnitte gemäß Schritt b) umfassen:
b1) Bestimmen einer Referenzkennlinie, die kennzeichnend für den Verlauf einer Referenzabziehkraft einer Referenzverpackung über den Weg in Abziehrichtung ist;
b2) Bestimmen der Mehrzahl von Abschnitten anhand der Referenzkennlinie und entsprechendes Einteilen der Siegelnaht in die Mehrzahl von Abschnitten.

Die Referenzkennlinie entspricht dem Peelkraft- bzw. Abziehkraft-Bruchweg-Diagramm und somit dem Kraftverlauf einer (Referenz-) Abziehkraft der Referenzverpackung. Die Referenzkennlinie kann aus der Auslegung, aus Versuchen oder aus Simulationen gewonnen werden.

Die Referenzverpackung ist bevorzugt entsprechend der herzustellenden Verpackung ausgebildet, insbesondere hinsichtlich des Verlaufs und der Ausbildung der Siegelnaht sowie der Materialkombination von Deckfolie und Formteil. Die Referenzverpackung kann mit initialen Prozessparametern, insbesondere mit einer initialen Siegeltemperatur hergestellt worden sein. Die Referenzpackung kann aber auch mit bereits angepassten Prozessparametern, insbesondere mit einer angepassten Siegeltemperatur oder eine Siegeltemperaturverteilung hergestellt worden sein.

Das Bestimmen der Mehrzahl von Abschnitten anhand der Referenzkennlinie gemäß Schritt b2) kann das Festlegen von Grenzen zwischen den Abschnitten anhand des Bruchwegs aus dem Diagramm der Referenzkennlinie umfassen, anhand derer die Siegelnaht in die Mehrzahl von Abschnitte einzuteilen ist. Insbesondere kann Schritt b2) das Erkennen kritischer Bereiche der Referenzkennlinie und das Bestimmen der Abschnitte entsprechend der kritischen Bereiche der Referenzkennlinie umfassen.

Das Bestimmen einer Abziehkraft gemäß Schritt c) kann als das Festlegen oder Bestimmen einer vorbestimmten Abziehkraft, insbesondere eines Sollwerts, eines Minimalwerts oder eines Maximalwerts der Abziehkraft verstanden werden. Da sich die Abziehkraft entlang der Siegelnaht in einem Abschnitt ändern kann und in der Regel nicht konstant ist, ist das Bestimmen eines Minimalwerts, Maximalwerts oder eines Toleranzbereichs, zum Beispiel um den Sollwert, bevorzugt. Vorzugsweise umfasst Schritt c) das Bestimmen einer Abziehkraft für jeden Abschnitt der Mehrzahl von Abschnitten.

Das Bestimmen einer Abziehkraft gemäß Schritt c) kann das Festlegen einer maximalen Abziehkraft umfassen, insbesondere das Festlegen einer maximalen ersten Abziehkraft für den ersten Abschnitt. Ist der erste Abschnitt, wie oben beschrieben, in Abziehrichtung der erste von mehreren Abschnitten, in dem die Verpackung initial geöffnet wird, soll die erste Abziehkraft im ersten Abschnitt eine maximale Abziehkraft nicht überschreiten, um jedermann ein einfaches Öffnen der Verpackung zu ermöglichen. Dies trifft umso mehr zu, wenn der Kraftverlauf der Abziehkraft für den ersten Abschnitt den Anfangspeak aufweist, wodurch das Öffnen erschwert und ein ruckartiges Öffnen riskiert wird. Natürlich sollte die erste Abziehkraft eine vorgegebene minimale erste Abziehkraft nicht unterschreiten, um die Unversehrtheit der Verpackung während der Herstellung und des Transports sowie eine ausreichende Dichtheit zu gewährleisten.

Zusätzlich oder alternativ kann das Bestimmen einer Abziehkraft gemäß Schritt c) das Festlegen einer minimalen Abziehkraft umfassen. Vorzugsweise umfasst Schritt c) das Festlegen einer minimalen zweiten Abziehkraft für den zweiten Abschnitt, vor allem wenn dieser in Abziehrichtung nach dem ersten Abschnitt angeordnet ist. Liegt der Kraftverlauf der Abziehkraft für den zweiten Abschnitt im Bereich des charakteristischen Plateaus, soll die zweite Abziehkraft im zweiten Abschnitt eine minimale Abziehkraft nicht unterschreiten, um die Unversehrtheit der Verpackung während der Herstellung und des Transports sowie eine ausreichende Dichtheit zu gewährleisten. Natürlich sollte auch die zweite Abziehkraft eine vorgegebene maximale zweite Abziehkraft nicht überschreiten, um ein einfaches Öffnen der Verpackung zu ermöglichen.

In dem oben aufgeführten Beispiel, in dem die Mehrzahl von Abschnitten weiterhin den dritten Abschnitt als Endabschnitt umfasst, kann das Bestimmen einer Abziehkraft gemäß Schritt c) das Festlegen einer minimalen und/oder einer maximalen dritten Abziehkraft für den dritten Abschnitt umfassen. Ist die Deckfolie vollständig von dem Formteil zu entfernen, ist es bevorzugt, dass Schritt c) das Festlegen einer maximalen dritten Abziehkraft umfasst, insbesondere wenn der Kraftverlauf der Abziehkraft für den dritten Abschnitt den Schlusspeak aufweist. Dadurch wird ein einfaches und möglichst ruckfreies Ablösen der Deckfolie erreicht. Es sind aber auch Fälle denkbar, in denen es gewünscht ist, dass die Deckfolie nicht vollständig von dem Formteil entfernt werden kann. In diesem Fall kann Schritt c) das Festlegen einer minimalen dritten Abziehkraft umfassen. Die minimale dritte Abziehkraft kann dann so hoch angesetzt werden, dass sich die Deckfolie nicht manuell lösen lässt.

Die erste und die zweite Abziehkraft betragen in einer bevorzugten Ausführungsform zwischen 2N und 15N, mehr bevorzugt zwischen 5N und 10N. Die dritte Abziehkraft beträgt im Falle eines Endabschnitts vorzugsweise mehr als 10N, mehr bevorzugt mehr als 15N, noch mehr bevorzugt mehr als 20N.

Das Bestimmen der Abziehkraft für zumindest den ersten Abschnitt und vorzugsweise für alle Abschnitte der Mehrzahl von Abschnitten gemäß Schritt c) kann in Abhängigkeit von der Geometrie der Siegelnaht erfolgen. Zum Beispiel erstreckt sich die Siegelnaht im ersten Abschnitt weiter in einer Richtung quer zur Abziehrichtung als im zweiten Abschnitt. Auch im dritten Abschnitt kann sich die Siegelnaht weiter quer zur Abziehrichtung als im zweiten Abschnitt erstrecken.

Das Bestimmen der Abziehkraft für zumindest einen Abschnitt der Mehrzahl von Abschnitten gemäß Schritt c) kann auch anhand der zuvor beschriebenen Referenzkennlinie einer Referenzverpackung erfolgen. Schritt c) umfasst dann:
c1) Feststellen eines Bereichs der Referenzkennlinie, in dem die Referenzabziehkraft außerhalb eines Toleranzbereichs liegt;
c2) Bestimmen des Abschnitts der Mehrzahl von Abschnitten der Siegelnaht, der dem Bereich entspricht, in dem die Referenzabziehkraft außerhalb des Toleranzbereichs liegt;
c3) Festlegen der Abziehkraft für den gemäß Schritt c2) bestimmten Abschnitt der Siegelnaht, sodass die Abziehkraft dieses Abschnitts innerhalb des Toleranzbereichs liegt.

Zum Beispiel wird in Schritt c1) erkannt, dass der Anfangspeak der Referenzkennlinie über einem vorgegebenen Maximalwert liegt. Gemäß Schritt c2) kann dann der Abschnitt der Siegelnaht bestimmt werden, in dem der Anfangspeak auftritt. Für diesen Abschnitt wird die Abziehkraft dann so festgelegt, dass sie unter dem Maximalwert liegt (Schritt c3)).

Schritt d) umfasst bevorzugt das Einstellen von Siegeltemperaturen der Siegelvorrichtung zum Erzeugen der Siegelnaht. Folglich ist die Siegelvorrichtung derart ausgebildet, dass sie entlang der Siegelnaht unterschiedliche Temperaturen erzeugen kann, wie unter Bezugnahme auf die Siegelvorrichtung detaillierter beschrieben ist.

Zumindest für den ersten Abschnitt, für den die Abziehkraft gemäß Schritt c) bestimmt wurde, wird eine erste Siegeltemperatur der Siegelvorrichtung basierend auf der gemäß Schritt c) bestimmten Abziehkraft eingestellt. Vorzugsweise wird für jeden Abschnitt der Mehrzahl von Abschnitten eine Abziehkraft gemäß Schritt c) festgelegt und folglich auch für jeden Abschnitt eine jeweilige Siegeltemperatur basierend auf der festgelegten Abziehkraft eingestellt. Um die Abziehkraft und insbesondere deren Verlauf entlang der Siegelnaht gemäß den vorliegenden Anforderungen anpassen zu können, unterscheidet sich zumindest die erste Siegeltemperatur für den ersten Abschnitt von der zweiten Siegeltemperatur für den zweiten Abschnitt. Eine dritte Siegeltemperatur für den dritten Abschnitt kann sich von der ersten und/oder zweiten Siegeltemperatur unterscheiden.

Das Einstellen der Siegeltemperaturen der Siegelvorrichtung kann das Einstellen einer Siegeltemperatur für jeden Abschnitt unabhängig von den anderen Abschnitten umfassen, kann das Einstellen eines Temperaturunterschieds eines Abschnitts gegenüber einem oder mehreren anderen Abschnitten oder das Einstellen eines Temperaturverhältnisses zwischen zwei Siegeltemperaturen, insbesondere zwischen der ersten und zweiten Siegeltemperatur umfassen.

Zum Beispiel kann Schritt c) weiterhin das Festlegen einer erforderlichen Änderung der Abziehkraft in einem Abschnitt umfassen, und Schritt d) umfasst dann das Einstellen der Siegeltemperaturen der Siegelvorrichtung gemäß einer mit der Änderung der Abziehkraft korrelierenden Änderung der Siegeltemperaturen.

Das Verfahren kann weiterhin das Bestimmen einer erforderlichen Siegelstärke in Abhängigkeit von der gemäß Schritt c) für zumindest den ersten Abschnitt der Mehrzahl von Abschnitten bestimmten Abziehkraft, das Bestimmen jeweils einer Siegeltemperatur in Abhängigkeit von der bestimmten Siegelstärke und das Einstellen der Siegelvorrichtung gemäß der bestimmten Siegeltemperatur umfassen. Zum Beispiel sind die Siegelstärke und die Siegeltemperatur im zweiten Abschnitt größer als im ersten und im dritten Abschnitt.

Die Schritte des Verfahrens, insbesondere die Schritte b) und c) und auch das Einstellen der Siegelvorrichtung gemäß Schritt d) sowie deren Unterschritte können unabhängig voneinander mittels einer Datenverarbeitungsvorrichtung, wie z.B. mittels eines Computers erfolgen. Bei der Datenverarbeitungsvorrichtung kann es sich um die Steuereinrichtung der Siegelvorrichtung oder um einen von der Siegelvorrichtung im Wesentlichen unabhängigen Computer handeln, der von der Steuereinrichtung getrennt ist oder kommunizierend mit dieser verbunden ist.

Nachfolgend ist eine Siegelvorrichtung zum Siegeln der Deckfolie an das Formteil beschrieben, die zum Ausführen des erfindungsgemäßen Verfahrens ausgebildet ist.

Bevorzugt ist jedem Abschnitt der Mehrzahl von Abschnitten der Siegelnaht zumindest ein Segment der Mehrzahl von Segmenten der Siegelkontur zugeordnet. Es können auch jeweils mehrere Segmente der Siegelkontur einem Abschnitt der Siegelnaht zugeordnet sein. Das Einstellen der Siegeltemperaturen der Siegelvorrichtung kann dann das Einstellen der Siegeltemperaturen der Mehrzahl von Segmenten umfassen.

Die Mehrzahl von Segmenten der Siegelkontur umfasst vorzugsweise mindestens vier, mehr bevorzugt mindestens sechs, noch mehr bevorzugt mindestens zwölf Segmente. Um einen guten Kompromiss zur Komplexität der Siegelvorrichtung zu finden, beträgt die Anzahl der Segmente der Mehrzahl von Segmenten bevorzugt maximal 28, mehr bevorzugt maximal 22, noch mehr bevorzugt maximal 16 Segmente. Es versteht sich, dass jede ganzzahlige Anzahl von Segmenten von der Mehrzahl von Segmenten umfasst sein kann.

Bei herkömmlichen Siegelvorrichtungen wird in der Regel die gesamte Siegelkontur mittels einer Heizpatrone großvolumig erwärmt. Unter anderem aufgrund der thermischen Trägheit solcher Siegelvorrichtungen ist es nicht ohne weiteres möglich, entlang der Siegelkontur gezielt unterschiedliche Siegeltemperaturen zu erzeugen.

Jedes Segment der Mehrzahl von Segmenten kann die Deckfolie zum Siegeln gemäß Schritt d) im Wesentlichen unabhängig von den anderen Segmenten der Mehrzahl von Segmenten erwärmen. Die Segmente der Mehrzahl von Segmenten sind somit einzeln ansteuerbar. Bevorzugt umfasst die Siegelvorrichtung dazu eine Mehrzahl von Heizelementen und eine Mehrzahl von Sensorelementen, wobei jedem Segment der Mehrzahl von Segmenten jeweils ein Heizelement und ein Sensorelement zugeordnet ist.

Die Heizelemente der Mehrzahl von Heizelementen sind jeweils dazu eingerichtet, ein Segment der Siegelkontur zum Siegeln gemäß Schritt d) zu erwärmen. Die Sensorelemente der Mehrzahl von Sensorelementen können zum Beispiel die Temperatur in jedem Segment erfassen. Jeweils ein Heizelement der Mehrzahl von Heizelementen und ein Sensorelement der Mehrzahl von Sensorelementen können integral ausgebildet sein. Dies ist zum Beispiel möglich, wenn die Heizelemente als Draht oder Leiterbahn ausgebildet sind und auf diese Weise eine elektrische Widerstandsheizung bilden. Über den elektrischen Widerstand eines solchen Heizelements, der sich mit der Temperatur ändert, kann zugleich auf dessen Temperatur geschlossen werden. Das Heizelement kann folglich als Sensorelement z.B. für den Widerstand, die Temperatur oder die elektrische Leistung angesehen werden.

Dass die Siegelkontur in die Mehrzahl von Segmenten eingeteilt ist, bedeutet nicht, dass die Segmente der Mehrzahl von Segmenten auf der der Deckfolie zugewandten Seite physisch/strukturell unterteilt bzw. voneinander getrennt sein müssen. Die Unterteilung der Siegelkontur in eine Mehrzahl von Segmenten kann auch "imaginär" erfolgen und beispielsweise durch die Funktion der Siegelvorrichtung bedingt sein, insbesondere auch durch weitere Komponenten, wie zum Beispiel die Mehrzahl von Heizelementen.

Entsprechend der Form der Siegelkontur ist die Mehrzahl von Segmenten der Siegelkontur vorzugsweise nur entlang der Siegelnaht angeordnet, wodurch die Deckfolie und das Formteil gezielt im Bereich der zu erzeugenden Siegelnaht erwärmt werden. Vorzugsweise steht nur eine der Deckfolie zugewandte Seite der Siegelkontur während Schritt d) in Kontakt mit der Deckfolie. Vorzugsweise grenzen die Segmente der Mehrzahl von Segmenten der Siegelkontur aneinander an und sind durchgängig entlang der Siegelkontur angeordnet. Die Mehrzahl von Segmenten kann folglich möglichst lückenlos entlang der Siegelkontur bzw. Siegelnaht angeordnet sein.

Die Siegelvorrichtung umfasst zudem eine Steuereinrichtung. Die Steuereinrichtung kann zum Ausführen der Verfahrensschritte, insbesondere des Schritts c) eingerichtet sein.

In einer bevorzugten Ausführungsform umfasst die Siegelvorrichtung weiterhin ein Trägersubstrat, das insbesondere aus Keramik gebildet ist. Auf einer der Deckfolie zugewandten Seite des Trägersubstrats können die Mehrzahl von Heizelementen und die Mehrzahl von Sensorelementen vorgesehen sein, wobei wahlweise jeweils ein Heizelement und ein Sensorelement integral ausgebildet sein können. Die Mehrzahl von Heiz- und/oder Sensorelementen können durch Drähte oder Leiterbahnen gebildet sein, die auf das Trägersubstrat aufgebracht sind. Leiterbahnen können direkt auf das Trägersubstrat aufgedampft oder aufgedruckt sein.

Zum Schutz der Mehrzahl von Heizelementen und der Mehrzahl von Sensorelementen kann eine Schutzschicht vorgesehen sein, die die Heizelemente und die Sensorelemente zur Deckfolie hin bedeckt. Die Schutzschicht kann eine dünne Platte sein, die die Heiz- und Sensorelemente überdeckt. Die Schutzschicht kann aber auch eine Abdeckschicht auf dem Trägersubstrat sein, in die die Heiz- und Sensorelemente eingelassen sind. Vorzugszuweise bildet zumindest die Schutzschicht die Siegelkontur. Alternativ kann auch das Trägersubstrat, das mit den Heiz- und Sensorelementen ausgestattet ist, oder eine separate Siegelkomponente, die auf dem Trägersubstrat oder der Schutzschicht angeordnet ist, die Siegelkontur bilden.

Weitere Merkmale und Vorteile der vorliegenden Erfindung ergeben sich aus der nachfolgenden Beschreibung unter Bezugnahme auf die beigefügten Zeichnungen.
- Fig. 1: zeigt eine Ausführungsform einer Siegelvorrichtung zum Ausführen des erfindungsgemäßen Verfahrens in einer perspektivischen Ansicht.
- Fig. 2: zeigt einen Teil der Siegelvorrichtung nach Fig. 1 schematisch in einer Schnittansicht.
- Fig. 3: zeigt einen Teil der Siegelvorrichtung nach Fig. 1 schematisch in einer Draufsicht.
- Fig. 4a,: b zeigen exemplarisch eine Verpackung in einer perspektivischen Ansicht mit und ohne Deckfolie.
- Fig. 5: zeigt ein Formteil der Verpackung nach Fig. 4 in einer Draufsicht.
- Fig. 6: zeigt schematisch eine Kennlinie einer Abziehkraft (Abziehkraft-Bruchweg-Diagramm).
- Fig. 7: zeigt ein Formteil der Verpackung nach Fig. 4 in einer Draufsicht.
- Fig. 8a,: b sind Ablaufdiagramme eines erfindungsgemäßen Verfahrens.

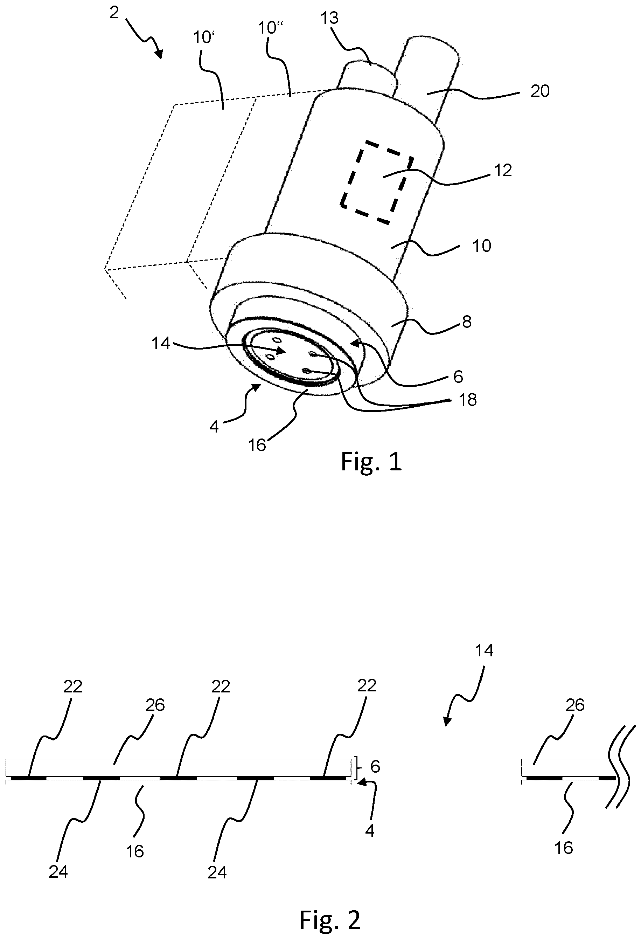

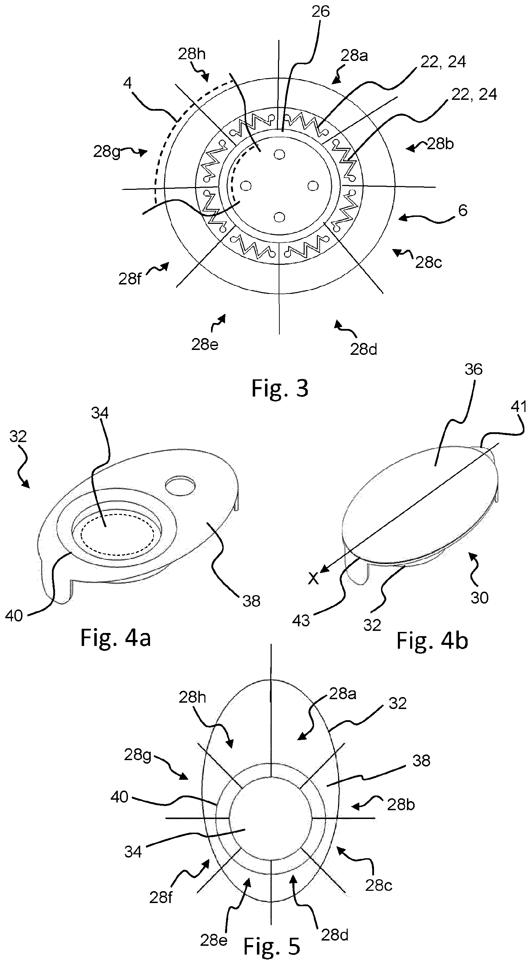

In Fig. 1 ist eine Ausführungsform einer Siegelvorrichtung 2 in einer perspektivischen Ansicht dargestellt. Die Siegelvorrichtung 2 weist eine Siegelkontur 4 auf, die dazu ausgebildet ist, mit einer Deckfolie einer zu versiegelnden Verpackung (siehe Fig. 4) in Kontakt zu treten. Zum thermischen Siegeln der Deckfolie an ein Formteil der zu versiegelnden Verpackung umfasst die Siegelvorrichtung 2 eine Heizeinrichtung 6, die die Siegelkontur 4 erwärmt und dazu in thermisch leitendem Kontakt mit der Siegelkontur 4 steht. Die Heizeinrichtung 6 kann mittels eines Isolationskörpers 8 der Siegelvorrichtung 2 mit einem Gehäuse 10 der Siegelvorrichtung 2 verbunden sein. Der Isolationskörper 8 isoliert das Gehäuse 10, die darin aufgenommenen Komponenten, sowie die übrige Siegelvorrichtung 2 thermisch von der Heizeinrichtung 6, sodass die von dieser generierte Wärme gezielt in die Siegelkontur 4 geleitet wird.

Im Gehäuse 10 kann beispielsweise eine Steuereinrichtung 12 zum Steuern und Regeln der Siegelvorrichtung 2 aufgenommen sein. Die Steuereinrichtung 12 ist mit der Heizeinrichtung 6 verbunden. Die Steuereinrichtung 12 und die Heizeinrichtung 6 können über einen Anschluss 13 mit Strom und gegebenenfalls weiteren Steuersignalen versorgt werden. Es ist auch denkbar, dass die Steuereinrichtung 12 außerhalb des Gehäuses 10 vorgesehen ist und Steuersignale über eine entsprechende Leitung am Anschluss 13 an die Heizeinrichtung 6 sendet.

Wie in Fig. 1 dargestellt, ist die Siegelkontur 4 im Wesentlichen ringförmig ausgebildet und umschließt einen zentralen Bereich 14, in dem die Siegelvorrichtung 2 keine Siegelkontur 4 aufweist. Die Siegelkontur 4 weist vorzugsweise eine Form auf, die im Wesentlichen mit der Form einer zu erzeugenden Siegelnaht korrespondiert (siehe Fig. 3 bis 5), wodurch die Wärmeeinbringung durch die Siegelvorrichtung 2 gezielt auf den Bereich der zu erzeugenden Siegelnaht gerichtet ist. Die Siegelkontur 4 kann gegenüber anderen Komponenten und Bereichen, insbesondere gegenüber dem zentralen Bereich 14, hervorragen. Dies wird in der dargestellten Ausführungsform dadurch erreicht, dass die Siegelkontur 4 eine Schutzschicht 16 umfasst, die die Heizeinrichtung 6 schützt und aus einem thermisch gut leitenden Material gebildet ist. Die Siegelkontur 4 kann aber auch integral mit der Heizeinrichtung 6 ausgebildet sein, indem diese ein entsprechendes Profil aufweist.

Die Siegelvorrichtung 2 kann weiterhin zumindest eine Saugöffnung 18 zum Ansaugen der Deckfolie und Anordnen der Deckfolie auf dem Formteil mittels der Siegelvorrichtung 2 umfassen. Hier umfasst die Siegelvorrichtung 2 eine Mehrzahl solcher Saugöffnungen 18, die über einen entsprechenden Anschluss 20 am Gehäuse 10 mit einer Unterdruckquelle, wie zum Beispiel einer Vakuumpumpe, verbunden sind und innerhalb der Siegelkontur 4 im zentralen Bereich 14 der Siegelvorrichtung 2 angeordnet sind.

Die Siegelvorrichtung 2 kann auch zum Siegeln einer Mehrzahl von Verpackungen bzw. einer Verpackung mit einer Mehrzahl von Produktaufnahmen und Siegelnähten ausgebildet sein. In diesem Fall umfasst die Siegelvorrichtung eine der Anzahl von Produktaufnahmen entsprechende Mehrzahl von Siegelkonturen 4, wie in Fig. 1 beispielhaft durch die gestrichelt gekennzeichneten Gehäuse 10' und 10" angedeutet ist, an denen jeweils eine analog zur zuvor beschriebenen Siegelvorrichtung 2 ausgebildete Siegelkontur und Heizeinrichtung vorgesehen sind.

In Fig. 2 und Fig. 3 sind jeweils Details der Siegelvorrichtung 2, insbesondere der Heizeinrichtung 6 dargestellt. Die Siegelvorrichtung 2 umfasst eine Mehrzahl von Heizelementen 22 zum Erwärmen der Siegelkontur 4, wobei die Heizelemente 22 wesentliche Bestandteile der Heizeinrichtung 6 bilden. Weiterhin umfasst die Siegelvorrichtung 2 eine Mehrzahl von Sensorelementen 24, die vorzugsweise zum Erfassen der Temperatur der Heizelemente 22 und/oder der Siegelkontur 4 eingerichtet sind. Die Mehrzahl von Heizelementen 22 und die Mehrzahl von Sensorelementen 24 können als Leiterbahnen ausgebildet sein, die auf ein Trägersubstrat 26 aufgebracht sind. Zum Beispiel sind die Leiterbahnen auf eine der Deckfolie zugewandte Seite bzw. eine vom Isolationskörper 8 abgewandte Seite des Trägersubstrats 26 aufgedruckt. Das Trägersubstrat 26 ist vorzugsweise aus Keramik gebildet. Dadurch wird eine sehr dynamisch und lokal gezielt regelbare Heizeinrichtung 6 bereitgestellt. Die Schutzschicht 16 kann die Mehrzahl von Heizelementen 22 und die Mehrzahl von Sensorelementen 24 zu deren Schutz vor Verschleiß überdecken, wie in Fig. 2 dargestellt. In der Draufsicht nach Fig. 3 ist die Siegelkontur 4 bzw. Schutzschicht 16 zur Veranschaulichung der Heizelemente 22 nur teilweise gestrichelt angedeutet.

In der Ausführungsform nach Fig. 2 sind die Heizelemente 22 der Mehrzahl von Heizelementen 22 getrennt von den Sensorelementen 24 der Mehrzahl von Sensorelementen 24 ausgebildet, z.B. durch separate Drähte, Leiterbahnen, Sensoren.

In der Ausführungsform nach Fig. 3 sind jeweils ein Heizelement 22 und ein Sensorelement 24 integral ausgebildet, hier zum Beispiel durch eine einzige Leiterbahn. Dies kann beispielsweise dadurch erreicht werden, dass die Mehrzahl von Heizelementen 22 elektrische Widerstandsheizungen sind. Deren Widerstand ändert sich in Abhängigkeit von der Temperatur, die sich somit über den Widerstand des jeweiligen Heizelements 22 erfassen lässt. Sofern nicht anders beschrieben, können beide Ausführungsformen beliebig eingesetzt und mit allen anderen hierin beschriebenen Merkmalen der Siegelvorrichtung 2 kombiniert werden.

Wie sich aus einer Zusammenschau der Figuren 1 und 3 ergibt, ist die Siegelkontur 4 in eine Mehrzahl von Segmenten 28 eingeteilt. Im dargestellten Ausführungsbeispiel umfasst die Mehrzahl von Segmenten 28 acht Segmente 28a, 28b, 28c, 28d, 28e, 28f, 28g, 28h. Die Siegelkontur 4 muss nicht strukturell in Segmente 28a-h unterteilt sein. Zum Beispiel kann die Siegelkontur 4 auch, wie dargestellt, korrespondierend zur Anordnung der Mehrzahl von Heizelementen 22 "imaginär" in die Segmente 28a-h eingeteilt sein, sodass jedes Segment 28a-h ein Heizelement 22 und vorzugsweise ein Sensorelement 24 umfasst. Die Segmente 28a-h grenzen vorzugsweise aneinander an und sind durchgängig entlang der Siegelkontur 4 angeordnet. Jedes Heizelement 22 erwärmt das jeweilige, ihm zugeordnete Segment 28a-h der Siegelkontur 4 und jedes Sensorelement 24 überwacht das jeweilige, ihm zugeordnete Segment 28a-h der Siegelkontur 4, insbesondere dessen Temperatur. Dadurch ist jedes Segment 28a-h der Mehrzahl von Segmenten 28 einzeln ansteuerbar und überwachbar.

In Fig. 4a, b ist eine Verpackung 30, die mittels des erfindungsgemäßen Verfahrens und der Siegelvorrichtung 2 herstellbar ist, in einer perspektivischen Ansicht dargestellt. Die Verpackung 30 umfasst ein Formteil 32, in dem eine Produktaufnahme 34 ausgebildet ist, und eine Deckfolie 36, die an das Formteil 32 gesiegelt ist. Zur besseren Veranschaulichung ist die Deckfolie 32 nur in Fig. 4b gezeigt, während sie in Fig. 4a zur Darstellung darunter liegender Merkmale ausgeblendet ist. Das Formteil 32 kann ein Spritzgussteil sein, wie es beispielsweise für die Verpackung von Kontaktlinsen verwendet wird, oder kann eine Blisterpackung sein, wie sie beispielsweise für die Verpackung von pharmazeutischen Produkten verwendet wird. Die Produktaufnahme 34 ist vorzugsweise als Napf bzw. Hof im Formteil 32 ausgebildet und enthält vorzugsweise ein Produkt und/oder ein Fluid (nicht dargestellt). Bevorzugt weist das Formteil 32 einen Flansch 38 auf, der die Produktaufnahme 34 umgibt und die Deckfolie 36 kontaktiert.

Die Deckfolie 36 ist entlang einer Siegelnaht 40, die die Produktaufnahme 34 umgibt, an das Formteil 32 gesiegelt. Hierzu kann der Flansch 38 eine Siegelfläche bereitstellen, auf der die Siegelnaht 40 ausgebildet ist. Die Deckfolie 36 weist einen freien ersten Bereich 41 auf, der nicht mit dem Formteil verbunden ist und auch als Aufreißlasche 41 bezeichnet wird. Die Aufreißlasche 41 kann von einem Anwender erfasst werden, um die Deckfolie 36 vom Formteil 32 abzuziehen. Eine Abziehrichtung, in die die Deckfolie 36 zum Öffnen der Verpackung 30 zu ziehen ist, ist in Fig. 4b durch einen Pfeil X gekennzeichnet. Die Abziehrichtung X erstreckt sich von der Aufreißlasche 41 in Richtung eines Endabschnitts 43 der Deckfolie 36. Der Endabschnitt 43 ist beim Öffnen der Verpackung 30 am längsten mit dem Formteil 32 verbunden oder gar unlösbar mit dem Formteil 32 verbunden.

In Fig. 5 ist das Formteil 32 der Verpackung 30 in einer Draufsicht dargestellt, wobei zur Veranschaulichung der Siegelnaht 40 um die Produktaufnahme 34 die Deckfolie 36, die entlang der Siegelnaht 40 an das Formteil 32 gesiegelt ist, nicht dargestellt ist. Hier ist besonders gut zu erkennen, dass die Siegelnaht 40 die Produktaufnahme 34 vollständig umgibt, um die Produktaufnahme 34 dicht zu verschließen. Wie sich aus einer Zusammenschau der Figuren 3 und 5 ergibt, weisen die Siegelnaht 40 und die Siegelkontur 4 der Siegelvorrichtung 2 bevorzugt eine korrespondierende Form auf.

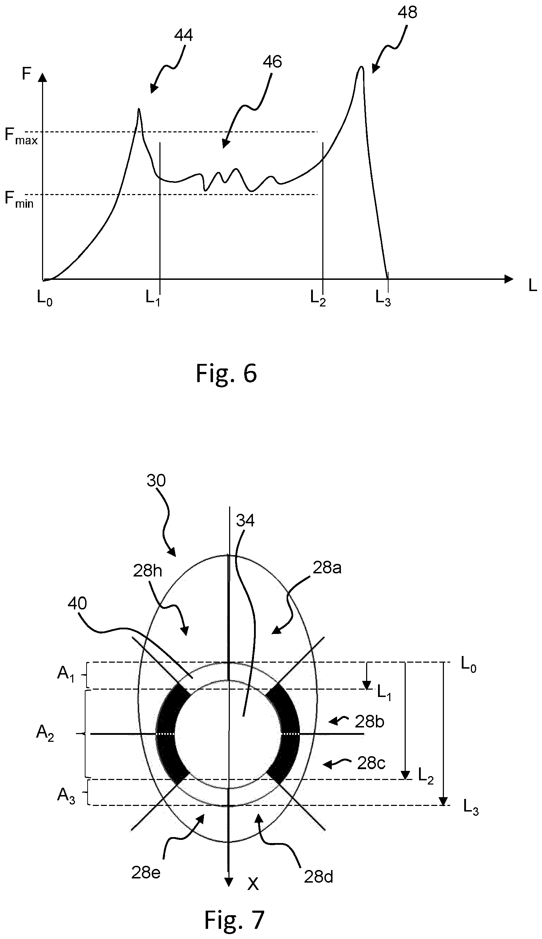

Zum besseren Verständnis im Weiteren ist zudem die Einteilung der Mehrzahl von Segmenten 28 auch in Fig. 5 angedeutet. So ist ersichtlich, dass die Siegelnaht 40 in Abschnitte einteilbar ist (siehe Fig. 7), denen jeweils ein oder mehrere Segmente 28a-h der Siegelkontur 4 zuordenbar sind.

In Fig. 6 ist beispielhaft ein Abziehkraft-Bruchweg-Diagramm einer Abziehkraft F einer Deckfolie vom Formteil über einen Bruchweg L dargestellt. Zu sehen ist ein üblicher Abziehkraft- bzw. Peelkraftverlauf, wie Eingangs beschrieben, der einen Anfangspeak 44, ein Plateau 46 und einen Schlusspeak 48 aufweist. Wie in Fig. 7 dargestellt, ist der Bruchweg L parallel zur Abziehrichtung X ausgerichtet.

Der Abziehkraftverlauf nach Fig. 6 kann als Referenzkennlinie einer Referenzverpackung angesehen werden. Die Referenzverpackung kann der Verpackung nach Fig. 4 entsprechen, wobei die Deckfolie 36 mittels initialer Siegelparameter, insbesondere einheitlicher Siegeltemperatur entlang der Siegelkontur 4, an das Formteil 32 gesiegelt wurde.

In Fig. 6 sind zudem eine Minimalkraft Fₘᵢₙ und eine Maximalkraft Fₘₐₓ angedeutet. Die Minimalkraft Fₘᵢₙ entspricht einer vorbestimmten Abziehkraft, die für eine ausreichend starke Verbindung der Deckfolie mit dem Formteil sowie eine ausreichende Dichtheit der Siegelnaht erforderlich ist. Die Maximalkraft Fₘₐₓ entspricht einer vorbestimmten Abziehkraft, unter der ein einfaches Lösen der Deckfolie vom Formteil möglich ist. Dem Diagramm ist zu entnehmen, dass der Anfangspeak 44 und der Schlusspeak 48 die Maximalkraft Fₘₐₓ übersteigt.

Mit dem erfindungsgemäßen Verfahren ist es nun möglich, die Abziehkraft gezielt in dem Bereich, in dem sie außerhalb eines gewünschten Toleranzbereichs liegt, hier also Bereich des Anfangspeaks 44 und des Schlusspeaks 48, in einem gewünschten Maße zu reduzieren ohne zugleich zu bewirken, dass die Abziehkraft zum Beispiel im Bereich des Plateaus 46 geringer als die Minimalkraft Fₘᵢₙ wird.

Das erfindungsgemäße Verfahren wird nachfolgend unter Bezugnahme auf die Figuren 6-8 beschrieben.

Zunächst wird in einem Schritt a) die zu erzeugende Siegelnaht 40 und insbesondere deren Verlauf um die Produktaufnahme 34 sowie ihre geometrische Ausbildung definiert, wie sie zum Beispiel in Fig. 4, 5 und 7 zu sehen ist. Anschließend wird die zu erzeugende Siegelnaht 40 in einem Schritt b) in eine Mehrzahl von Abschnitte A1, A2, und A3 eingeteilt, die zumindest einen ersten Abschnitt A1 und einen zweiten Abschnitt A2 umfasst (siehe Fig. 7). Das Einteilen der Siegelnaht in die Abschnitte A1, A2 und A3 kann basierend auf Erfahrungswerten, auf der Auslegung der Siegelnaht 40 oder auf einer Regelung/Optimierung durch die Steuereinrichtung 12 erfolgen.

In einer bevorzugten Ausführungsform erfolgt das Einteilen der zu erzeugenden Siegelnaht 40 gemäß Schritt b) anhand einer Referenzkennlinie, wie sie in Fig. 6 dargestellt ist. Die Referenzkennlinie ist kennzeichnend für den Verlauf einer Referenzabziehkraft einer Referenzverpackung über den Weg L in Abziehrichtung. Hierzu wird die Referenzkennlinie der Referenzverpackung zunächst in einem Schritt b1) bestimmt. Danach wird anhand der Referenzkennlinie die Mehrzahl von Abschnitten A1, A2, A3 bestimmt und die Siegelnaht in die Mehrzahl von Abschnitte A1, A2, A3 eingeteilt (Schritt b2)). Insbesondere können Grenzen zwischen den Abschnitten A1, A2, A3 aus dem Diagramm der Referenzkennlinie abgelesen werden. Zum Beispiel wird eine erste Länge L1 des Bruchwegs derart bestimmt, dass der Anfangspeak 44 zwischen dem Startpunkt L0 und der ersten Länge L1 liegt. Eine zweite Länge L2 kann derart gewählt werden, dass das Plateau 46 zwischen der ersten Länge und der zweiten Länge L1, L2 ausgebildet ist. Schließlich kann eine dritte Länge L3 derart bestimmt werden, dass der Schlusspeak 48 zwischen der zweiten und der dritten Länge L2, L3 liegt. Auf diese Art und Weise orientieren sich die Abschnitte A1, A2 und A3 der Siegelnaht 40 an Bereichen der Abziehkraft, an die mithin unterschiedliche Anforderungen gestellt sind.

Wie in Fig. 7 zu erkennen, können die Längen L1, L2 und L3 in Abziehrichtung X auf die Verpackung 30 übertragen werden, um dadurch die Abschnitte A1, A2 und A3 der Siegelnaht 40 zu bestimmen. Folglich entspricht der erste Abschnitt A1 der Siegelnaht 40 der ersten Länge L1 des Bruchwegs, der zweite Abschnitt A2 der Siegelnaht 40 der zweiten Länge L2 des Bruchwegs, und der dritte Abschnitt A3 der Siegelnaht 40 der dritten Länge L3 des Bruchwegs. Der erste, der zweite und der dritte Abschnitt A1, A2, A3 sind in Abziehrichtung X hintereinander angeordnet.

Aus einer Zusammenschau der Fig. 4 und 7 ergibt sich, dass der erste Abschnitt A1 in diesem Ausführungsbeispiel ein Aufreißabschnitt ist, in dem die Deckfolie 36 zum Öffnen der Verpackung 30 als erstes vom Formteil 32 zu lösen ist und in dessen Bereich die Deckfolie 36 die Aufreißlasche 41 aufweist. Der zweite Abschnitt A2 ist ein Abziehabschnitt, in dem die Deckfolie 36 in Abziehrichtung X zum dritten Abschnitt hin abzuziehen ist. Der zweite Abschnitt A2 umfasst hier zwei Teilabschnitte der Siegelnaht 40, die über den ersten und den dritten Abschnitt A1, A3 miteinander verbunden sind. Der dritte Abschnitt A3 ist ein Endabschnitt, der beim Öffnen der Verpackung 30 am längsten mit dem Formteil 32 verbunden ist oder gar unlösbar mit dem Formteil 32 verbunden ist.

Gemäß Schritt c) wird nun eine Abziehkraft der Deckfolie 36 vom Formteil 32 für zumindest einen Abschnitt der Mehrzahl von Abschnitten A1, A2, A3 bestimmt, wobei zumindest eine erste Abziehkraft F für den ersten Abschnitt A1 bestimmt wird. Vorzugsweise wird für jeden Abschnitt eine Abziehkraft bestimmt, also auch eine zweite Abziehkraft F für den zweiten Abschnitt A2 und eine dritte Abziehkraft für den dritten Abschnitt A3.

Hierzu kann gemäß Schritt c) eine Soll-Abziehkraft vorgegeben bzw. im System hinterlegt sein und von der Steuereinrichtung 12 herangezogen werden. Schritt c) kann aber auch das Festlegen der maximalen Abziehkraft Fₘₐₓ umfassen. Zusätzlich oder alternativ kann Schritt c) das Festlegen der minimalen Abziehkraft Fₘᵢₙ umfassen. Im dargestellten Beispielsfall der Fig. 6 und 7 umfasst Schritt c) das Festlegen einer maximalen ersten Abziehkraft für den ersten Abschnitt A1 und einer minimalen zweiten Abziehkraft für den zweiten Abschnitt A2, wie zuvor beschrieben.

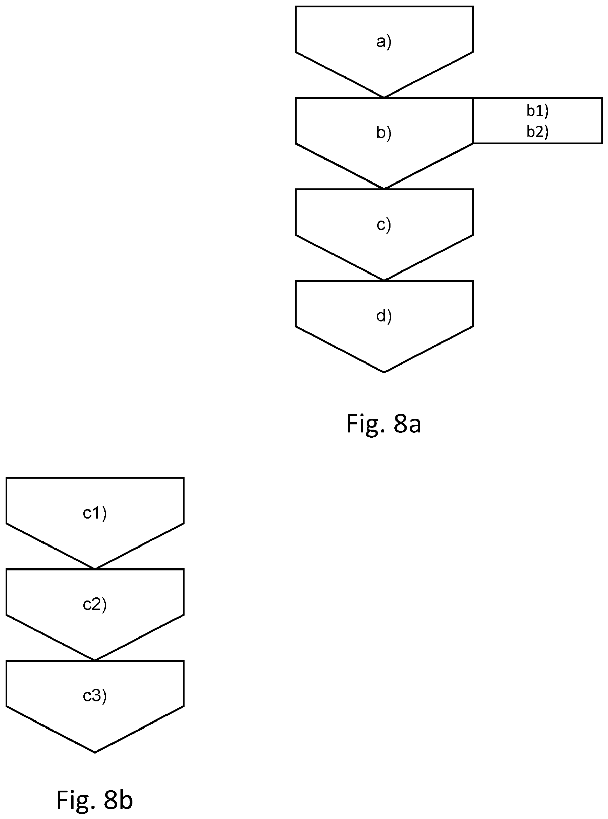

Es ist ersichtlich, dass somit auch das Bestimmen der Abziehkraft für zumindest einen Abschnitt gemäß Schritt c) anhand der Referenzkennlinie (Fig. 6) erfolgen kann, wie in Fig. 8b gezeigt. Der Schritt c) umfasst daher bevorzugt das Feststellen eines Bereichs der Referenzkennlinie, in dem die Referenzabziehkraft außerhalb eines Toleranzbereichs liegt (Schritt c1)) und das Bestimmen des Abschnitts der Mehrzahl von Abschnitten A1, A2, A3 der Siegelnaht 40, der dem Bereich entspricht, in dem die Referenzabziehkraft außerhalb des Toleranzbereichs liegt (Schritt c2)). Für den gemäß Schritt c2) bestimmten Abschnitt wird dann in einem Schritt c3) eine Abziehkraft festgelegt, die innerhalb des Toleranzbereichs liegt.

Beispielsweise kann der Toleranzbereich zwischen der minimalen und der maximalen Abziehkraft Fₘᵢₙ, Fₘₐₓ definiert sein (siehe Fig. 6) und der Bereich der Referenzkennlinie, der außerhalb dieses Toleranzbereichs liegt, wäre der Anfangspeak 44. Folglich würde in Schritt c2) der erste Abschnitt A1 bestimmt, da er dem Bereich entspricht, in dem die Abziehkraft den Anfangspeak 44 aufweist. Gemäß Schritt c3) wird dann für den ersten Abschnitt A1 eine Abziehkraft zwischen der minimalen und der maximalen Abziehkraft Fₘᵢₙ, Fₘₐₓ festgelegt.

Nun kann die Deckfolie 36 gemäß Schritt d) an das Formteil 32 gesiegelt werden. Dazu werden Siegeltemperaturen der Siegelvorrichtung 2 eingestellt, wobei zumindest für den ersten Abschnitt A1, für den zuvor die Abziehkraft gemäß Schritt c) bestimmt wurde, die Siegeltemperatur basierend auf der gemäß Schritt c) bestimmten Abziehkraft eingestellt. Im vorliegenden Beispiel wird folglich die Siegeltemperatur für den ersten Abschnitt A1 gegenüber einer Siegeltemperatur des ersten Abschnitts der Referenzverpackung niedriger eingestellt, um im ersten Abschnitt A1 eine geringere Siegelstärke und somit eine geringere Abziehkraft zu bewirken. Dadurch, dass zumindest die Siegeltemperatur des ersten Abschnitts A1 verändert wird, unterscheiden sich die erste Siegeltemperatur und eine zweite Siegeltemperatur für den zweiten Abschnitt A2 voneinander. Würde man in diesem Beispiel auch im zweiten Abschnitt A2 die Siegeltemperatur senken, bestünde die Gefahr, dass die Abziehkraft im zweiten Abschnitt A2 geringer als die minimale Abziehkraft Fₘᵢₙ wird.

In Fig. 7 ist zu erkennen, dass zumindest ein erstes Segment 28a der Siegelkontur 4 dem ersten Abschnitt A1 und zumindest ein zweites Segment 28b der Siegelkontur 4 dem zweiten Abschnitt A2 zugeordnet ist. Weiterhin ist dem ersten Abschnitt A1 auch das Segment 28h und dem zweiten Abschnitt A2 die Segmente 28c, f, g zugeordnet. Dem dritten Abschnitt A3 sind hier die Segmente 28d und 28e zugeordnet.

Da die Siegeltemperatur in jedem Segment 28a-h mittels der Mehrzahl von Heizelementen 22 (siehe Fig. 3) individuell einstellbar ist, umfasst das Einstellen der Siegelvorrichtung das Einstellen der Siegeltemperatur jedes Segments 28a-h.

Mit der entsprechend eingestellten Siegelvorrichtung 2 kann die Deckfolie 36 nun an das Formteil 32 entlang der Siegelnaht 40 gemäß Schritt d) gesiegelt werden. Hierzu wird die Mehrzahl von Segmenten 28 der Siegelkontur 4 entsprechend den eingestellten Siegeltemperaturen erwärmt und in Kontakt mit der Deckfolie 36 gebracht, um durch Bildung der Siegelnaht 40 die Deckfolie 36 an das Formteil 32 zu siegeln. Dadurch wird die Verpackung 30 hergestellt, deren Deckfolie 36 sich mit einer gewünschten Abziehkraft in Abziehrichtung X vom Formteil 32 lösen lässt, wobei die Abziehkraft entlang der Abziehrichtung X nach Belieben so eingestellt ist, dass sowohl eine ausreichend starke Verbindung als auch ein einfaches Öffnen gewährleistet sind.

## Patentansprüche

1. Verfahren zum Herstellen einer Verpackung (30), insbesondere einer heißversiegelten Kunststoffverpackung, die zumindest eine mittels einer Deckfolie (36) verschlossene Produktaufnahme (34) eines Formteils (32) umfasst, wobei das Verfahren die folgenden Schritte umfasst:
a) Definieren einer zu erzeugenden Siegelnaht (40), entlang derer die Deckfolie (36) um die Produktaufnahme (34) herum an das Formteil (32) zu siegeln ist;
b) Einteilen der zu erzeugenden Siegelnaht (40) in eine Mehrzahl von Abschnitten (A1, A2, A3), die zumindest einen ersten Abschnitt (A1) und einen zweiten Abschnitt (A2) umfasst;
c) Bestimmen einer Abziehkraft (F) der Deckfolie (36) vom Formteil (32) zumindest für den ersten Abschnitt (A1) der Mehrzahl von Abschnitten (A1, A2, A3) und vorzugsweise jeweils einer Abziehkraft (F) für jeden Abschnitt der Mehrzahl von Abschnitten (A1, A2, A3);
d) Siegeln der Deckfolie (36) an das Formteil (32) entlang der Siegelnaht (40) mittels einer Siegelvorrichtung (2) mit einer ersten Siegeltemperatur im ersten Abschnitt (A1) und einer zweiten Siegeltemperatur im zweiten Abschnitt (A2), wobei sich die erste und die zweite Siegeltemperatur unterscheiden, und wobei zumindest die erste Siegeltemperatur für den ersten Abschnitt (A1) basierend auf der gemäß Schritt c) bestimmten Abziehkraft (F) gewählt ist;
**dadurch gekennzeichnet, dass**
die Siegelvorrichtung (2) eine Siegelkontur (4) aufweist, die in eine Mehrzahl von Segmenten (28) eingeteilt ist, wobei zumindest ein erstes Segment (28a) der Mehrzahl von Segmenten dem ersten Abschnitt (A1) der Siegelnaht (40) und zumindest ein zweites Segment (28b) der Mehrzahl von Segmenten (28) dem zweiten Abschnitt (A2) der Siegelnaht (40) zugeordnet ist, und Schritt d) das Erwärmen der Mehrzahl von Segmenten (28) entsprechend den Siegeltemperaturen umfasst.

2. Verfahren nach Anspruch 1, **dadurch gekennzeichnet, dass** Schritt d) umfasst:
Einstellen von Siegeltemperaturen der Siegelvorrichtung (2) für jeden Abschnitt der Mehrzahl von Abschnitten (A1, A2, A3), wobei zumindest die erste Siegeltemperatur für den ersten Abschnitt (A1) basierend auf der gemäß Schritt c) bestimmten Abziehkraft (F) eingestellt wird.

3. Verfahren nach einem der vorangehenden Ansprüche, **dadurch gekennzeichnet, dass** die Deckfolie (36) in eine Abziehrichtung (X) vom Formteil (32) abzuziehen ist und dass der erste Abschnitt (A1) und der zweite Abschnitt (A2) in Abziehrichtung (X) hintereinander angeordnet sind.

4. Verfahren nach Anspruch 3, **dadurch gekennzeichnet, dass** die Mehrzahl von Abschnitten (A1, A2, A3) den ersten Abschnitt (A1), den zweiten Abschnitt (A2) und einen dritten Abschnitt (A3) umfasst,
wobei der erste Abschnitt (A1) ein Aufreißabschnitt ist, in dem die Deckfolie (36) zum Öffnen der Verpackung (30) als erstes vom Formteil (32) zu lösen ist, wobei die Deckfolie (36) in einem dem ersten Abschnitt (A1) zugeordneten ersten Bereich der Deckfolie (36) vorzugsweise eine Aufreißlasche (41) aufweist;
wobei der zweite Abschnitt (A2) ein Abziehabschnitt ist, der zwischen dem ersten und dem dritten Abschnitt (A1, A3) angeordnet ist und in dem die Deckfolie (36) zum Öffnen der Verpackung (30) vom ersten Abschnitt (A1) in Abziehrichtung (X) zum dritten Abschnitt (A3) hin abzuziehen ist;
wobei der dritte Abschnitt (A3) ein Endabschnitt (43) ist, der in Abziehrichtung (X) hinter dem ersten und dem zweiten Abschnitt (A1, A2) angeordnet ist und in dem die Deckfolie (36) beim Öffnen der Verpackung (30) am längsten mit dem Formteil (32) verbunden ist, wobei sich eine dritte Siegeltemperatur für den dritten Abschnitt (A3) von der ersten und/oder zweiten Siegeltemperatur unterscheidet.

5. Verfahren nach Anspruch 4, **dadurch gekennzeichnet, dass** die erste Abziehkraft (F) und/oder eine zweite Abziehkraft (F) für den zweiten Abschnitt (A2) zwischen 2 N und 20 N, vorzugsweise zwischen 5 N und 10 N betragen.

6. Verfahren nach Anspruch 4 oder 5, **dadurch gekennzeichnet, dass** eine dritte Abziehkraft (F) für den dritten Abschnitt (A3) mehr als 10 N, bevorzugt mehr als 15 N und mehr bevorzugt mehr als 20 N beträgt.

7. Verfahren nach einem der vorangehenden Ansprüche, **dadurch gekennzeichnet, dass** das Bestimmen einer Abziehkraft (F) gemäß Schritt c) das Festlegen einer maximalen Abziehkraft (Fₘₐₓ) umfasst, insbesondere das Festlegen einer maximalen ersten Abziehkraft (Fₘₐₓ) für den ersten Abschnitt (A1).

8. Verfahren nach einem der vorangehenden Ansprüche, **dadurch gekennzeichnet, dass** das Bestimmen einer Abziehkraft (F) gemäß Schritt c) das Festlegen einer minimalen Abziehkraft (Fₘᵢₙ) umfasst, insbesondere das Festlegen einer minimalen zweiten Abziehkraft (Fₘᵢₙ) für den zweiten Abschnitt (A2).

9. Verfahren nach einem der vorangehenden Ansprüche, **dadurch gekennzeichnet, dass** Schritt b) umfasst:
b1) Bestimmen einer Referenzkennlinie, die kennzeichnend für den Verlauf einer Referenzabziehkraft (F) einer Referenzverpackung (30) über den Weg (L) in Abziehrichtung (X) ist;
b2) Bestimmen der Mehrzahl von Abschnitten (A1, A2, A3) anhand der Referenzkennlinie und entsprechendes Einteilen der Siegelnaht (40) in die Mehrzahl von Abschnitten (A1, A2, A3).

10. Verfahren nach Anspruch 9, **dadurch gekennzeichnet, dass** Schritt c) umfasst:
c1) Feststellen eines Bereichs der Referenzkennlinie, in dem die Referenzabziehkraft (F) außerhalb eines Toleranzbereichs liegt;
c2) Bestimmen des Abschnitts der Mehrzahl von Abschnitten (A1, A2, A3) der Siegelnaht (40), der dem Bereich entspricht, in dem die Referenzabziehkraft (F) außerhalb des Toleranzbereichs liegt;
c3) Bestimmen der Abziehkraft (F) für den gemäß Schritt c2) bestimmten Abschnitt der Siegelnaht (40), sodass die Abziehkraft (F) dieses Abschnitts innerhalb des Toleranzbereichs liegt.

11. Verfahren nach einem der vorangehenden Ansprüche, **dadurch gekennzeichnet, dass** die Siegelnaht (40) um die Produktaufnahme (34) eine Länge aufweist, die zwischen 10 mm und 1200 mm, vorzugsweise zwischen 25 mm und 600 mm, mehr bevorzugt zwischen 50 mm und 150 mm beträgt.

12. Verfahren nach einem der vorangehenden Ansprüche, **dadurch gekennzeichnet, dass** die Mehrzahl von Segmenten (28) der Siegelkontur (4) mindestens vier, vorzugsweise mindestens sechs, mehr bevorzugt mindestens zwölf Segmente (28) umfasst.

13. Verfahren nach einem der vorangehenden Ansprüche, **dadurch gekennzeichnet, dass** die Siegelvorrichtung (2) eine Mehrzahl von Heizelementen (22) umfasst, wobei jedem Segment (28a-h) der Mehrzahl von Segmenten (28) jeweils ein Heizelement (22) zugeordnet ist, wobei das Erwärmen der Mehrzahl von Segmenten (28) mittels der Mehrzahl von Heizelementen (22) erfolgt.

14. Verfahren nach einem der vorangehenden Ansprüche, **dadurch gekennzeichnet, dass** die Abschnitte der Mehrzahl von Abschnitten (A1, A2, A3) aneinander angrenzen und durchgängig entlang der Siegelnaht (40) angeordnet sind, wobei das Siegeln gemäß Schritt d) entlang der gesamten Siegelnaht (40) um die Produktaufnahme (34) herum erfolgt.

## Claims

1. A method for manufacturing a packaging (30), in particular a heat-sealed plastic packaging, which comprises at least one product cavity (34) of a formed part (32) closed by means of a covering film (36), wherein the method comprises the following steps:
a) defining a seam (40) to be produced, along which the covering film (36) is to be sealed to the formed part (32) around the product cavity (34);
b) dividing the seam (40) to be produced into a plurality of sections (A1, A2, A3), which comprise at least a first section (A1) and a second section (A2) ;
c) determining a pulling-off force (F) for pulling the covering film (36) from the formed part (32), at least for the first section (A1) of the plurality of sections (A1, A2, A3) and preferably a pulling-off force (F) respectively for each section of the plurality of sections (A1, A2, A3);
d) sealing the covering film (36) to the formed part (32) along the seam (40) by means of a sealing device (2) with a first sealing temperature in the first section (A1) and a second sealing temperature in the second section (A2), wherein the first and the second sealing temperatures are different, and wherein at least the first sealing temperature for the first section (A1) is chosen on the basis of the pulling-off force (F) determined according to step c);
**characterized in that**
the sealing device (2) has a sealing contour (4), which is divided into a plurality of segments (28), wherein at least a first segment (28a) of the plurality of segments is assigned to the first section (A1) of the seam (40) and at least a second segment (28b) of the plurality of segments (28) is assigned to the second section (A2) of the seam (40), and step d) comprises heating the plurality of segments (28) in accordance with the sealing temperatures.

2. The method according to claim 1, **characterized in that** step d) comprises:
setting sealing temperatures of the sealing device (2) for each section of the plurality of sections (A1, A2, A3), wherein at least the first sealing temperature for the first section (A1) is set on the basis of the pulling-off force (F) determined according to step c).

3. The method according to one of the preceding claims, **characterized in that** the covering film (36) is to be pulled off from the formed part (32) in a pulling-off direction (X) and **in that** the first section (A1) and the second section (A2) are arranged one behind the other in the pulling-off direction (X).

4. The method according to claim 3, **characterized in that** the plurality of sections (A1, A2, A3) comprises the first section (A1), the second section (A2) and a third section (A3),
wherein the first section (A1) is a tearing-open section, in which the covering film (36) is to be detached first from the formed part (32) for opening the packaging (30), wherein the covering film (36) preferably has a tear-open tab (41) in a first region of the covering film (36) that is assigned to the first section (A1);
wherein the second section (A2) is a pulling-off section, which is arranged between the first and the third section (A1, A3) and in which the covering film (36) is to be pulled off in the pulling-off direction (X) from the first section (A1) to the third section (A3) for opening the packaging (30);
wherein the third section (A3) is an end section (43), which is arranged behind the first and the second section (A1, A2) in the pulling-off direction (X) and in which the covering film (36) is connected longest to the formed part (32) when opening the packaging (30), wherein a third sealing temperature for the third section (A3) differs from the first and/or second sealing temperature.

5. The method according to claim 4, **characterized in that** the first pulling-off force (F) and/or the second pulling-off force (F) for the second section (A2) are between 2 N and 20 N, preferably between 5 N and 10 N.

6. The method according to claim 4 or 5, **characterized in that** a third pulling-off force (F) for the third section (A3) is more than 10 N, preferably more than 15 N and more preferably more than 20 N.

7. The method according to one of the preceding claims, **characterized in that** determining a pulling-off force (F) according to step c) comprises establishing a maximum pulling-off force (Fₘₐₓ), in particular establishing a maximum first pulling-off force (Fₘₐₓ) for the first section (A1).

8. The method according to one of the preceding claims, **characterized in that** determining a pulling-off force (F) according to step c) comprises establishing a minimum pulling-off force (Fₘᵢₙ), in particular establishing a minimum second pulling-off force (Fₘᵢₙ) for the second section (A2).

9. The method according to one of the preceding claims, **characterized in that** step b) comprises:
b1) determining a reference characteristic which is characteristic of the variation in a reference pulling-off force (F) of a reference packaging (30) over the distance (L) in the pulling-off direction (X);
b2) determining the plurality of sections (A1, A2, A3) on the basis of the reference characteristic and correspondingly dividing the seam (40) into the plurality of sections (A1, A2, A3).

10. The method according to claim 9, **characterized in that** step c) comprises:
c1) establishing a region of the reference characteristic in which the reference pulling-off force (F) lies outside a tolerance range;
c2) determining the section of the plurality of sections (A1, A2, A3) of the seam (40) that corresponds to the region in which the reference pulling-off force (F) lies outside the tolerance range;
c3) determining the pulling-off force (F) for the section of the seam (40) determined according to step c2) such that the pulling-off force (F) of this section lies within the tolerance range.

11. The method according to one of the preceding claims, **characterized in that** the seam (40) around the product cavity (34) has a length which is between 10 mm and 1200 mm, preferably between 25 mm and 600 mm, more preferably between 50 mm and 150 mm.

12. The method according to one of the preceding claims, **characterized in that** the plurality of segments (28) of the sealing contour (4) comprises at least four, preferably at least six, more preferably at least twelve segments (28).

13. The method according to one of the preceding claims, **characterized in that** the sealing device (2) comprises a plurality of heating elements (22), wherein each segment (28a-h) of the plurality of segments (28) is respectively assigned a heating element (22), wherein the heating of the plurality of segments (28) takes place by means of the plurality of heating elements (22).

14. The method according to one of the preceding claims, **characterized in that** the sections of the plurality of sections (A1, A2, A3) adjoin one another and are arranged continuously along the seam (40), wherein the sealing according to step d) takes place along the entire seam (40) around the product cavity (34).

## Revendications

1. Procédé de fabrication d'un emballage (30), notamment d'un emballage de matière synthétique thermo-scellé, qui comprend au moins un logement de produit (34) d'une pièce moulée (32) qui est fermé au moyen d'un film de recouvrement (36), le procédé comprenant les étapes suivantes :
a) définir un cordon de scellement (40) à réaliser le long duquel le film de recouvrement (36) doit être scellé à la pièce moulée (32) autour du logement de produit (34) ;
b) diviser le cordon de scellement (40) à réaliser en une pluralité de portions (A1, A2, A3), laquelle comprend au moins une première portion (A1) et une deuxième portion (A2) ;
c) déterminer une force de tirage (F) du film de recouvrement (36) de la pièce moulée (32) au moins pour la première portion (A1) de la pluralité de portions (A1, A2, A3) et de préférence une force de tirage (F) pour chaque portion de la pluralité de portions (A1, A2, A3) ;
d) sceller le film de recouvrement (36) sur la pièce moulée (32) le long du cordon de scellement (40) au moyen d'un dispositif de scellement (2) à une première température de scellement dans la première portion (A1) et à une deuxième température de scellement dans la deuxième portion (A2), les première et deuxième températures de scellement étant différentes, et au moins la première température de scellement de la première portion (A1) étant choisie sur la base de la force de tirage (F) déterminée selon l'étape c) ;
**caractérisé en ce que**
le dispositif de scellement (2) présente un contour de scellement (4) divisé en un pluralité de segments (28), au moins un premier segment (28a) de la pluralité de segments étant associé à la première portion (A1) du cordon de scellement (40) et au moins un deuxième segment (28b) de la pluralité de segments (28) étant associé à la deuxième portion (A2) du cordon de scellement (40), et l'étape d) comprenant le chauffage de la pluralité de segments (28) en fonction des températures de scellement.

2. Procédé selon la revendication 1, **caractérisé en ce que** l'étape d) comprend l'opération suivante :
régler les températures de scellement du dispositif de scellement (2) pour chaque portion de la pluralité de portions (A1, A2, A3), au moins la première température de scellement de la première portion (A1) étant réglée sur la base de la force de tirage (F) déterminée selon l'étape c) .

3. Procédé selon l'une des revendications précédentes, **caractérisé en ce que** le film de recouvrement (36) doit être tiré de la pièce moulée (32) dans un sens de tirage (X) et **en ce que** la première portion (A1) et la deuxième portion (A2) sont disposées l'une derrière l'autre dans le sens de tirage (X) .

4. Procédé selon la revendication 3, **caractérisé en ce que** la pluralité de portions (A1, A2, A3) comprend la première portion (A1), la deuxième portion (A2) et une troisième portion (A3),
la première portion (A1) étant une portion déchirable dans laquelle le film de recouvrement (36) doit d'abord être détaché de la pièce moulée (32) pour ouvrir l'emballage (30), le film de recouvrement (36) comportant de préférence une languette déchirable (41) dans une première zone du film de recouvrement (36) associée à la première portion (A1) ;
la deuxième portion (A2) étant une portion de tirage qui est disposée entre les première et troisième portions (A1, A3) et dans laquelle le film de recouvrement (36) doit être tiré dans le sens de tirage (X) de la première portion (A1) vers la troisième portion (A3) pour ouvrir l'emballage (30) ;
la troisième portion (A3) étant une portion d'extrémité (43) qui est disposée derrière les première et deuxième portions (A1, A2) dans le sens de tirage (X) et dans laquelle le film de recouvrement (36) est relié le plus longtemps à la pièce moulée (32) lors de l'ouverture de l'emballage (30), une troisième température de scellement de la troisième portion (A3) différant des première et/ou deuxième températures de scellement.

5. Procédé selon la revendication 4, **caractérisé en ce que** la première force de tirage (F) et/ou une deuxième force de tirage (F) destinée à la deuxième portion (A2) sont comprises entre 2 N et 20 N, de préférence entre 5 N et 10 N.

6. Procédé selon la revendication 4 ou 5, **caractérisé en ce qu'**une troisième force de tirage (F) destinée à la troisième portion (A3) est supérieure à 10 N, de préférence supérieure à 15 N et plus préférablement supérieure à 20 N.

7. Procédé selon l'une des revendications précédentes, **caractérisé en ce que** la détermination d'une force de tirage (F) selon l'étape c) comprend la définition d'une force de tirage maximale (Fₘₐₓ), en particulier la définition d'une première force de tirage maximale (Fₘₐₓ) de la première portion (A1).

8. Procédé selon l'une des revendications précédentes, **caractérisé en ce que** la détermination d'une force de tirage (F) selon l'étape c) comprend la définition d'une force de tirage minimale (Fₘᵢₙ), en particulier la définition d'une deuxième force de tirage minimale (Fₘᵢₙ) de la deuxième portion (A2).

9. Procédé selon l'une des revendications précédentes, **caractérisé en ce que** l'étape b) comprend les opérations suivantes :
b1) déterminer une courbe caractéristique de référence qui est caractéristique de l'évolution d'une force de tirage de référence (F) d'un emballage de référence (30) sur le trajet (L) dans le sens de tirage (X) ;
b2) déterminer la pluralité de portions (A1, A2, A3) sur la base de la courbe caractéristique de référence et diviser en conséquence le cordon de scellement (40) en la pluralité de portions (A1, A2, A3).

10. Procédé selon la revendication 9, **caractérisé en ce que** l'étape c) comprend les opérations suivantes :
c1) déterminer une zone de la courbe caractéristique de référence dans laquelle la force de tirage de référence (F) est située à l'extérieur d'une zone de tolérance ;
c2) déterminer la portion de la pluralité de portions (A1, A2, A3) du cordon de scellement (40) qui correspond à la zone dans laquelle la force de tirage de référence (F) est située à l'extérieur de la zone de tolérance ;
c3) déterminer la force de tirage (F) de la portion du cordon de scellement (40) qui est déterminée selon l'étape c2), de manière à ce que la force de tirage (F) de cette portion soit comprise dans la zone de tolérance.

11. Procédé selon l'une des revendications précédentes, **caractérisé en ce que** le cordon de scellement (40) autour du logement de produit (34) a une longueur comprise entre 10 mm et 1200 mm, de préférence entre 25 mm et 600 mm, plus préférable entre 50 mm et 150 mm.

12. Procédé selon l'une des revendications précédentes, **caractérisé en ce que** la pluralité de segments (28) du contour de scellement (4) comprend au moins quatre, de préférence au moins six, plus préférablement au moins douze, segments (28).

13. Procédé selon l'une des revendications précédentes, **caractérisé en ce que** le dispositif de scellement (2) comprend une pluralité d'éléments chauffants (22), chaque segment (28a-h) de la pluralité de segments (28) étant associé à un élément chauffant (22), le chauffage de la pluralité de segments (28) étant effectué au moyen de la pluralité d'éléments chauffants (22).

14. Procédé selon l'une des revendications précédentes, **caractérisé en ce que** les portions de la pluralité de portions (A1, A2, A3) sont adjacentes les unes aux autres et sont disposées de manière continue le long du cordon de scellement (40), le scellement selon l'étape d) étant effectué le long de tout le cordon de scellement (40) autour du logement de produit (34) .
